# EUROPEAN PATENT SPECIFICATION

(11) **EP 4 215 156 B1**
(45) Date of publication and mention of the grant of the patent: **16.07.2025**
(21) Application number: 22152423.4
(22) Date of filing: 20.01.2022
(51) Int. Cl.: A61C 17/22, A61C 17/34

(54) **AN ELECTRICALLY OPERATED ASSEMBLY AND ELECTRICALLY OPERATED PERSONAL CARE IMPLEMENT**
ELEKTRISCH BETRIEBENE ANORDNUNG UND ELEKTRISCH BETRIEBENES KÖRPERPFLEGEGERÄT
ENSEMBLE À COMMANDE ÉLECTRIQUE ET INSTRUMENT DE SOINS PERSONNELS À COMMANDE ÉLECTRIQUE

(43) Date of publication of application: 26.07.2023
(73) Proprietor: The Gillette Company LLC, Boston, Massachusetts 02127 (US)
(72) Inventor: JUNGNICKEL, Uwe, 61476 Kronberg (DE); GOETZ, NICOLAS, 61476 Kronberg (DE)
(74) Representative: P&G Patent Germany

(56) References cited:
- CN-A- 113 017 893
- US-A1- 2003 162 146
- US-A1- 2012 233 788
- US-A1- 2021 315 368
- "Essentials of Materials Science and Engineering, 2nd edition", 2009, CENGAGE LEARNING, Toronto, Canada, article ASKELAND DONALD R ET AL: "6-4 Properties obtained from the tensile test", XP055935903

## Description

### FIELD OF THE INVENTION

The present disclosure is concerned with an electrically operated assembly, the assembly comprising a handle housing defining an inner cavity, a connector for repeatably attaching and detaching a head to and from the assembly, and a motor for operating the assembly. The present disclosure is further concerned with an electrically operated personal care implement comprising such assembly.

### BACKGROUND OF THE INVENTION

Personal care implements, like toothbrushes, are well known in the art. Generally, tufts of bristles for cleaning teeth are attached to a bristle carrier or mounting surface of a brush head intended for insertion into a user's oral cavity. A handle is usually attached to the head, which handle is held by the user during brushing.

Electrically operated toothbrushes exhibit the advantage that they assist users during brushing and may facilitate improved cleansing of the teeth and gums, in particular in hard to reach areas in the mouth.

Toothbrushes performing a vibration action usually have a motor with an eccentric weight located in the handle housing and allow vibrations to be transmitted to the head. The motor is usually fixed on a chassis and vibrates the entire handle (including the chassis) and therewith also the brush head that is attached to the handle. However, the amplitude of vibrations at the brush head depends on the way the user holds the handle: With a softer grip, the handle can vibrate more extensively and therefore the user feels more vibrations on the teeth. However, if the user holds the handle tightly, vibrations will be significantly damped, and the brush head will vibrate less during use. Consequently, performance of a vibration toothbrush, including in-mouth perception during use is highly dependent on the user's behavior. Also, the motor is usually mounted onto a chassis, the chassis being embedded inside the handle housing, while the brush head is mounted onto the handle housing. The additional chassis-housing interface can further absorb vibrations which leads to further losses of vibration energy.

Further, vibrating toothbrushes are known comprising a motor located within the neck of the toothbrush head close to the bristle carrier to allow the vibrations to be directly transmitted to the head. However, such configuration requires the neck of the toothbrush head to be relatively bulky and large in cross section to allow accommodation of the motor. Such bulky neck, however, impedes good maneuverability of the brush head during brushing and hinders sufficient reach to the back molars. Also, having the motor located within the brush neck requires the neck to be configured as a straight tube to enable insertion of motor components, which again hinders reachability of back molars.

US 2021/315368 A1 discloses a handle for an electrically operated personal-care implement comprises a housing defining an inner cavity accommodating a power source and a motor comprising an eccentric weight for operating the personal-care implement. The motor is mounted on a swivel-mounted carrier.

It is an object of the present disclosure to provide a handle for an electrically operated personal care implement, e.g. a handle for a toothbrush, which overcomes at least one of the above-mentioned drawbacks, in particular which provides reliable vibration modes during use while facilitating good maneuverability. It is also an object of the present disclosure to provide an electrically operated personal care implement comprising such handle.

### SUMMARY OF THE INVENTION

In accordance with one aspect, an electrically operated assembly for a personal care implement is provided, the assembly comprising a handle housing defining an inner cavity, a connector for repeatably attaching and detaching a head to and from the assembly, and a motor for operating the assembly, wherein
the connector comprises a recess in which the motor is accommodated, and the connector is at least partially made from a material having an e-modulus being higher than the e-modulus of the material from which the handle housing is made. The material from which the connector is at least partially made has an e-modulus of at least 4000 MPa, preferably from 4000 MPa to 20000 MPa, further preferably from 10000 MPa to 11000 MPa, even further preferably 10400 MPa, and the material from which the handle housing is made is polypropylene, acrylic styrene acrylonitrile, or copolyester.

In accordance with one aspect an electrically operated personal care implement is provided, the personal care implement comprising such electrically operated assembly and a head.

### BRIEF DESCRIPTION OF THE DRAWINGS

The invention is described in more detail below with reference to various embodiments and figures, wherein:
Fig. 1 shows a cross-sectional view of an example embodiment of an electrically operated personal care implement according to the present disclosure, the implement comprising a handle, and a head;
Fig. 2 shows a cross-sectional view of the handle of Fig. 1;
Fig. 3 shows an exploded view of the handle of Fig. 2; and
Fig. 4 shows an enlarged section of the proximal end structure of the handle shown in Fig. 2.

### DETAILED DESCRIPTION OF THE INVENTION

The electrically operated assembly which is suitable to be used in connection with an electrically operated personal care implement comprises a handle housing defining an inner cavity, a connector for repeatably attaching and detaching a head to and from the assembly, and a motor for operating the assembly. The motor which may comprise an eccentric weight is accommodated/mounted in a recess provided within the connector to allow for maximal generation of vibrations. The vibrations are transferrable via the connector to the head without significant absorption by the housing. In other words, as the motor comprising the eccentric weight may be mounted directly within the connector to which the head is attached, the vibrations generated by the motor can be directly guided to the head. Even if the housing is tightly grasped by a user, the vibrations will not be absorbed by a chassis or housing, but can be freely and directly transferred to the head.

Thereby, in-mouth perception and cleaning performance during brushing can be enhanced. In contrast to common brush executions having a vibrating function (the motor vibrating the entire handle and therewith the head), the assembly according to the present disclosure allows vibrations to be effectively transferred, independent from the way the handle is hold by the user; the amplitude of the vibrations is less damped as the motor is located within the connector, and therewith in close proximity to the head/bristle carrier.

Further, in contrast to vibrating toothbrushes having a motor located within the neck of a toothbrush head requiring a large/thick and straight neck design, the personal care implement according to the present disclosure allows for a slim and curved neck design, thereby not compromising on in-mouth maneuverability and comfort during brushing.

The connector may have a longitudinal length extension comprising a proximal end closest to the head attachable to the connector, and a distal end, the distal end being opposite the proximal end. For example, the recess accommodating the motor may be located at the distal end of the connector, i.e. on the opposite side of the head.

As used herein "personal care implement" refers to any implement which can be utilized for the purposes of personal hygiene. Some suitable examples include toothbrushes, flossers, tooth picks, razors, shavers, and trimmers. For example, the personal care implement may be battery-operated and may comprise a battery located within the inner cavity of the handle housing. The electrically operated personal care implement comprising such electrically operated assembly and a head may be an electrically operated oral care implement, for example a toothbrush. The head may be repeatedly attachable to and detachable from the electrically operated assembly/handle, e.g. via a snap-fit locking mechanism thereby providing sufficiently strong connection and stability between the head and the handle to enable a user to perform, e.g. a brushing action.

While the electrically operated assembly/handle of the personal care implement may be adapted for use over a longer period of time as compared to common implements, like manual toothbrushes which are discarded after about three months of use, the relatively cheap head/brush refill can be exchanged on a regular basis, e.g. after about three months. This provides a cost-efficient and environmentally sustainable personal care implement providing both, high quality handle solutions as well as cost saving opportunities for the consumer as only the head has to be exchanged/re-purchased and not the electrically operated assembly/handle.

The connector of the electrically operated assembly is at least partially made from a material having an e-modulus being higher than the e-modulus of the material from which the handle housing is made. A connector being made from a material having a higher e-modulus provides improved stability, stiffness and a secure connection between the connector and the head, in particular if high pressure and high lateral forces are applied during use of the implement.

In other words, the connector can be made from a material which is different from the material from which the handle housing is made. Depending on the intended use, the most suitable materials can be selected for both, the connector and the handle housing.

To provide the connector with improved mechanical properties in terms of stiffness and resistance against abrasion and wear out (e.g. due to abrasive toothpaste accumulating at the brush head connection), the connector may be made (e.g. molded) from a fiber reinforced material, preferably from a glass-fiber reinforced plastic material. Due to its high stiffness, glass fiber reinforced material is suitable for mounting the motor including the eccentric weight within the recess of the connector by means of press-fitting. As glass fiber reinforced material shows no to very limited relaxation over time, resulting in vibrations being efficiently transmittable over the usual life-time of the implement.

The material from which the connector is at least partially made has an e-modulus of at least 4000 MPa, for example from 4000 MPa to 20000 MPa, or form 10000 MPa to 11000 MPa, or 10400 MPa. A connector having such modulus of elasticity can be provided if the connector is at least partially molded from a hard plastic material, e.g. from a fiber reinforced material, for example a glass-fiber reinforced material.

Generally, the fiber reinforced material may comprise a polymer as a base material, and fibers selected from the group of: inorganic particulates, glass fibers, carbon fibers, aramid fibers, basalt fibers, wood fibers, or any combinations thereof. Glass fibers may improve strength, elasticity and heat resistance of the polymer base material. Carbon and aramid fibers may improve elasticity, tensile and compression strength of the polymer base material. Wood fibers may improve flexural strength, tensile modulus, and tensile strength of the polymer base material. Inorganic particulates may improve isotropic shrinkage, abrasion and compression strength of the polymer base material.

The fiber reinforced material may comprise from about 10wt% to about 50wt%, or from about 25wt% to about 35wt%, or about 30wt% fibers. The connector may be made from a glass fiber reinforced polymer material comprising about 30wt% glass fiber. The polymer base material in which the fibers may be embedded may be a polyamide or polybutylene terephthalate, polyethylene terephthalate, or a combination of polybutylene terephthalate and polyethylene terephthalate. A fiber reinforced material comprising from about 25wt% to about 35wt% glass fiber, wherein the glass fibers are embedded in either polyamide as a base material, or, alternatively in a base material comprising a mixture of polybutylene terephthalate and polyethylene terephthalate may have an e-modulus of about 10400 MPa. Such glass-fiber reinforced material shows superior molding properties while providing sufficient stiffness to the connector, as well as resistance against abrasion and wear out.

The glass fibers embedded in the polymer material may provide significantly increased stiffness, wear resistance and integrity to the polymer material forming the connector. For personal implements, for example oral care handles from which the heads are getting frequently detached and re-attached, such material provides the connector with wear resistance allowing the handle to be used over a longer period of time. Long lasting connector properties are in particular important for toothbrushes as the head and handle often get soiled with slurry and toothpaste containing abrasive particles. If the connector material is not sufficiently resistant against abrasives, the abrasives may grind/sand down material of the connector, thereby changing the outer geometry of the connector. As a result, the connector may lose its function, and/or its ability to securely hold the head in place during use, e.g. during brushing.

As glass fiber reinforced plastic materials have typically a less aesthetic appearance and are relatively expensive, the handle housing can be made from a material being more aesthetically appealing and/or cost effective. For example, the connector may be at least partially molded from a fiber reinforced material, while the handle housing is manufactured from relatively cheap (standard) plastic material, namely from polypropylene, acrylic styrene acrylonitrile, or copolyester. Such materials are highly durable and allow for slim product designs. A glass- fiber reinforced material forming the connector has a higher e-modulus than the standard plastic material used to manufacture the housing.

The handle housing is made from a hard plastic material, e.g. polypropylene, acrylic styrene acrylonitrile (ASA), or copolyester For example, if ASA is used as a material/base material for the handle housing, a material with an e-modulus of about 2500 MPa may be provided. The hard plastic material (e.g. ASA) may be at least partially over-molded by a thermoplastic elastomer (TPE) providing the handle housing with improved aesthetic and/or gripping properties.

The handle housing may have a proximal end and a distal end. The proximal end is defined as the end being closest to a head which is repeatably attachable to and detachable from the electrically operated assembly/handle. The distal end is opposite the proximal end.

The connector for repeatably attaching and detaching the head to and from the electrically operated assembly may be partially accommodated within the inner cavity at the proximal end of the handle housing. In other words, the handle housing may comprise an opening at its proximal end, and the connector for repeatedly attaching and detaching the head to and from the electrically operated assembly may extend through said opening.

As discussed above, the connector comprises a recess in which the motor, optionally with the eccentric weight, is (entirely) accommodated. For example, the motor comprising the eccentric weight may be mounted within the connector by means of press-fitting. The connector recess may be provided at the side/end of the connector which is located within the inner cavity of the handle housing. In other words, while the connector extends into the inner cavity of the handle housing at its proximal end, the head can be attached to the connector geometry extending outside of the handle housing. The motor comprising the eccentric weight may be located at the end opposite the head, inside the connector recess to allow for maximal generation of vibrations. The vibrations are transferrable via the connector to the head without significant absorption by the housing. In other words, as the motor comprising the eccentric weight may be mounted directly within the connector to which the head is attached, the vibrations generated by the motor can be directly guided to the head. Even if the housing is tightly grasped by a user, the vibrations will not be absorbed by a chassis or housing, but can be freely and directly transferred to the head.

In-mouth perception and cleaning performance during brushing is enhanced. In contrast to common brush executions having a vibrating function (the motor vibrating the entire handle and therewith the head), the handle according to the present disclosure allows vibrations to be effectively transferred, independent from the way the handle is hold by the user; the amplitude of the vibrations is less damped as the motor is located in close proximity to the connector, and therewith with the head and bristle carrier.

Further, in contrast to vibrating toothbrushes having a motor located within the neck of a toothbrush head requiring a large/thick and straight neck design, the personal care implement according to the present disclosure allows for a slim and curved neck design, thereby not compromising on in-mouth maneuverability and comfort during brushing.

The connector may define an overall length extension extending along a longitudinal connector axis. The overall length extension may be composed of a sub-length (Li) extending within the inner cavity of the handle housing, and a sub-length (Lo) extending outside of the handle housing. The ratio between the length (Li) extending within the inner cavity and the length (Lo) extending outside of the housing may be from about 1 to about 1.7, preferably from about 1 to about 1.5. Such ratio provides the connector with sufficient stability and bending stiffness to securely hold the head during use of the implement, while providing sufficient space for mounting the motor with the eccentric weight within the recess. Also, such ratio facilitates superior transmission of vibrations generated by the motor along the connector axis to the head.

For example, the overall length extension (Lc) of the connector may be from about 35 mm to about 45 mm, or from about 39 mm to about 43 mm. The sub-length extension (Li) of the connector which is accommodated within the inner cavity of the housing may be from about 20 mm to about 25 mm, or from about 22 mm to about 24 mm. The sub-length extension (Lo) of the connector which is outside of the housing may be from about 15 mm to about 20 mm, or from about 17 mm to about 19 mm.

The part/extension of the connector which is outside of the housing is the part to which the head can be attached. A relatively short connector head interface geometry allows for a slim neck design - a critical feature for superior maneuverability during use of the implement. Further, the neck design can also be curved, facilitating reachability of back molars during brushing.

A ratio between an overall length extension of the handle housing extending along a longitudinal housing axis and an overall length extension of the connector extending along a longitudinal connector axis may be from about 2.5 to about 4.5, or from about 3.0 to about 3.5.

In other words, compared to the overall length of the handle housing, the connector may be relatively short, yet highly durable due to the relatively high e-modulus, and forms only a relatively small part in relation to the handle housing. As the connector is relatively small and may, therefore, only contain critical geometries for a tight fit to the head and for tight fixation of the motor, the geometrical tolerances from a molding process can be better controlled. Tighter overall tolerances can be realized leading to better fit of the critical components (motor and head). A sufficient fit between the connector and head is a prerequisite for an efficient transmission of vibration energy.

For example, the overall length extension (Lh) of the handle housing extending along the longitudinal housing axis may be from about 120 mm to about 150 mm, or from about 125 mm to about 145 mm, or from about 130 mm to about 140 mm, or about 130 mm to about 135 mm.

The connector may comprise a spring-loaded snap element in the region outside of the handle housing. The spring-loaded snap element may provide a snap-fit locking mechanism to ensure sufficiently strong connection and stability between the head and the electrically operated assembly/toothbrush handle, e.g. to enable a user to perform a brushing action. The connector may have an outer lateral surface and a recess therein, the recess forming a cavity within the connector. Within the cavity a spring-loaded ball-snap element may be provided. The spring-loaded ball-snap element may comprise a ball and a spring, the spring applying a radial force onto the ball in a direction towards the outer lateral surface of the connector. In the following a radial force is defined by a force applied in a direction being substantially perpendicular to the longitudinal length extension of the connector. The spring may apply a force onto the ball and may push the ball outwards so that the ball extends slightly beyond the outer lateral surface of the connector. An inner wall of a hollow portion provided inside of the head may comprise a recess for receiving the ball of the spring-loaded ball element. Once the head is snap-fitted onto the connector, the head can be fixed on the connector in an axial direction. In other words, the connector may allow for easy attachment/detachment of the head to and from the connector. The user can attach the head to the handle by a simple linear motion. Further, the ball-snap may provide a precise fixation of the head, and a distinct haptic feedback may be given to the user that the head is snapped-on securely. In other words, the user can recognize once the ball engages into the recess in the inner wall of the hollow portion of the head. The head can be easily removed, i.e. without performing a synchronized action with other elements/unlocking mechanisms.

The head is fixed on the electrically operated assembly/handle until a specific/predetermined pull-off force is applied. The connection between the head and connector is sufficiently strong enabling well-coordinated brushing techniques. The head does not get loosened from the handle and does not twist aside during brushing.

The ball and/or the spring of the spring-loaded ball element may be made from stainless steel. While typical snap elements comprise a spring element made from plastic that shows relaxation and aging effects over time, a stainless steel spring shows a constant spring rate over time, also under extended use conditions (e.g. temperature). A spring-loaded ball element made from stainless steel may provide long-lasting, reliable fixation of the head on the connector/handle.

The spring-loaded ball element may be fixed in the cavity of the connector by a press-fitting process and/or gluing.

The connector may comprise a first substantially cylindrical section and a second substantially cylindrical section, wherein the first and the second cylindrical sections may be connected by an at least partially conically shaped section. The first substantially cylindrical section, the at least partially conically shaped section and the second substantially cylindrical section may be arranged in consecutive order and may define the longitudinal length extension of the connector. The first and the second substantially cylindrical sections may be placed off-center with respect to the longitudinal length extension of the connector.

In the following, a substantially cylindrical section is defined by a three-dimensional body having a longitudinal length extension and a cross-sectional area extending substantially perpendicular to the longitudinal length extension. The cross-sectional area has a shape being substantially constant along the longitudinal length extension. Since the connector may be manufactured by an injection molding process, a substantially cylindrical section also comprises sections/bodies which have a slight draft angle of up to about 2°. In other words, a substantially cylindrical section also comprises a section/body which tapers slightly by up to about 2° towards a proximal end which is closest to the head once the head is attached to the connector.

The cross-sectional area may have any shape, for example substantially circular, ellipsoid, rectangular, semi-circular, circular with a flattening portion, convex or concave. The cross-sectional area may have the shape of a polygon, for example of a square or triangle. The outer lateral surface circumventing the cylinder along its length extension can be defined as being composed of straight lines which are substantially parallel with respect to the longitudinal length extension of the cylinder.

The head of the personal care implement has a distal end and a proximal end, the proximal end being defined as the end closest to the handle. The proximal end of the head may comprise a hollow portion for receiving a part of the connector, for example, the second substantially cylindrical section, the at least partially conically shaped section and a part of the first substantially cylindrical section. The hollow portion of the head may have an inner wall with a geometry/contour which corresponds to the outer geometry/contour of the part of the connector to be inserted into the hollow portion of the head. The eccentric arrangement/off-center positioning of the substantially cylindrical sections of the connector enables precise positioning of the head on the handle. The geometric position of the head can be clearly defined. As the handle comprises the connector at a proximal end being closest to the head, the eccentric/off-center arrangement of the two substantially cylindrical sections may act as a guidance element when a user attaches the head to the handle. In other words, the two substantially cylindrical sections may allow for accurate fitting between the head and the handle. Further, the eccentric/off-center arrangement of the two substantially cylindrical sections may provide an anti-twist protection for the head on the handle during brushing, for example if a lateral force is applied onto the head.

The proximal end of the handle housing may comprise a chamfered surface. Such chamfered surface may provide the personal/oral care implement with additional anti-twist protection during use. The chamfered surface and a cross-sectional area of the handle may define an angle α from about 15° to about 30°, or from about 18° to about 28°, or about 25°. Said cross-sectional area is defined by an area extending substantially perpendicular to the longitudinal length extension of the handle. Surprisingly, it has been found out that such angled/chamfered surface provides superior anti-twist protection. Furthermore, the angled/chamfered surface allows for draining-off fluids, like toothpaste slurry and saliva, after use of the personal/oral care implement, thereby preventing accumulation of such fluids over time.

The handle housing may accommodate an energy source, e.g. a battery, and/or other means for operating the personal care implement. The handle housing may comprise a switch assembly connected to a Printed Circuit Board Assembly (PCBA) for activating the energy source, e.g. for switching the electrically operated personal care implement to an ON/OFF status. Via the PCBA electrical communication between the battery as an example for an energy source, and the motor can be provided.

The handle may comprise a magnetic/ferromagnetic plate placed inside the handle housing. The plate may allow for hygienic storage of the personal care implement by magnetically attaching the handle to a magnetic holder, e.g. provided at a wall. If the personal care implement is a toothbrush, remaining water, toothpaste slurry and saliva can drain off from the brush. The implement can dry relatively quickly. Consequently, bacteria growth can significantly be reduced, thereby rendering the personal/oral care implement more hygienic. In contrast to a common toothbrushes being stored in a toothbrush beaker where drained fluids get collected and accumulated at the bottom of the beaker, the brush according to the present disclosure is exposed to wet conditions over a significantly shorter period of time.

The magnetic holder may have the form of a flat disk attachable to a wall. Such flat disk may represent an easy to clean surface. Further, a user just needs to bring the personal/oral care implement in close proximity to the magnetic holder, and then the personal/oral care implement gets attached automatically. No precise positioning or threading as with common toothbrush holders is required. If the magnetic properties are merely provided in the handle, and not in the head, the head portion cannot accidentally be attached to the magnetic holder, thereby reducing the risk that the magnetic holder gets soiled.

If the personal care implement is a toothbrush, tooth cleaning elements, e.g. bundle of filaments forming one or a plurality of tufts, may be attached to the toothbrush head by means of a hot tufting process. One method of manufacturing the head with tufts of filaments embedded in the head may comprise the following steps: In a first step, tufts are formed by providing a desired amount of filaments. In a second step, the tufts are placed into a mold cavity so that ends of the filaments which are supposed to be attached to the head extend into said cavity. The opposite ends of the filaments not extending into said cavity may be either end-rounded or non-end-rounded. For example, the filaments may be not end-rounded in case the filaments are tapered filaments having a pointed tip. In a third step the head is formed around the ends of the filaments extending into the mold cavity by an injection molding process, thereby anchoring the tufts in the head. Alternatively, the tufts may be anchored by forming a first part of the head - a so called "sealplate" - around the ends of the filaments extending into the mold cavity by an injection molding process before the remaining part of the head is formed. Before starting the injection molding process the ends of the tufts extending into the mold cavity may be optionally melted or fusion-bonded to join the filaments together in a fused mass or ball so that the fused masses or balls are located within the cavity. The tufts may be held in the mold cavity by a mold bar having blind holes that correspond to the desired position of the tufts on the finished head of the oral care implement. In other words, the tufts attached to the head by means of a hot tufting process are not doubled over a middle portion along their length and are not mounted in the head by using an anchor/staple. The tufts are mounted on the head by means of an anchor-free tufting process.

Alternatively, the head for the oral care implement may be provided with a bristle carrier having at least one tuft hole, e.g. a blind-end bore. A tuft comprising a plurality of filaments may be fixed/anchored in said tuft hole by a stapling process/anchor tufting method. This means, that the filaments of the tuft are bent/folded around an anchor, e.g. an anchor wire or anchor plate, for example made of metal, in a substantially U-shaped manner. The filaments together with the anchor are pushed into the tuft hole so that the anchor penetrates into opposing side walls of the tuft hole thereby anchoring/fixing/fastening the filaments to the bristle carrier. The anchor may be fixed in opposing side walls by positive and frictional engagement. In case the tuft hole is a blind-end bore, the anchor holds the filaments against a bottom of the bore. In other words, the anchor may lie over the U-shaped bend in a substantially perpendicular manner. Since the filaments of the tuft are bent around the anchor in a substantially U-shaped configuration, a first limb and a second limb of each filament extend from the bristle carrier in a filament direction. Filament types which can be used/are suitable for usage in a stapling process are also called "two-sided filaments". Heads for oral care implements which are manufactured by a stapling process can be provided in a relatively low-cost and time-efficient manner.

The following is a non-limiting discussion of an example embodiment of a personal/oral care implement and parts thereof in accordance with the present disclosure, where reference to the Figures is made.

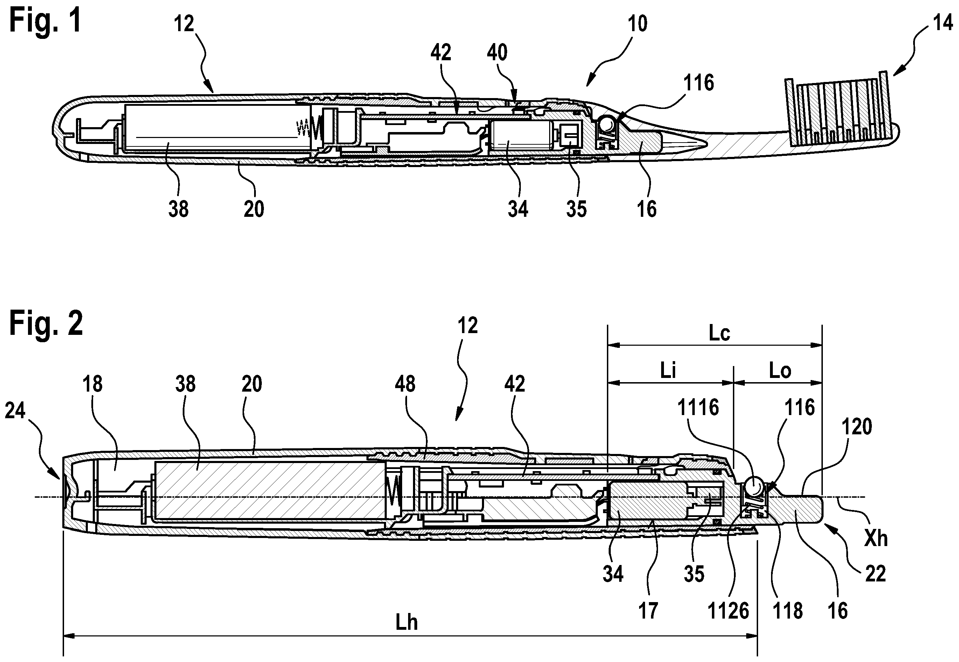

Fig. 1 shows a personal care implement 10, in this specific embodiment an electrically operated oral care implement, i.e. toothbrush 10. Toothbrush 10 comprises an electrically operated assembly 12, in this case a toothbrush handle 12 and a head 14, the head 14 being repeatedly attachable to and detachable from the handle 12 by means of connector 16. The connector 16 may comprise a spring-loaded snap element 116, e.g. a spring-loaded ball element 116 comprising a ball 1116 and a spring 1126, the spring 1126 applying a radial force onto the ball 1116 in a direction towards an outer lateral surface 120 of the connector 116. The ball 1116 may be insertable into a recess provided in a hollow portion of the head 14 to securely fix the head 14 onto the connector 16.

The electrically operated assembly 12/toothbrush handle 12 comprises a handle housing 20 defining an inner cavity 18. The housing 20 has a proximal end 22 closest to the head 14 attachable to the handle 12, and a distal end 24. The distal end 24 is opposite the proximal end 22. The connector 16 may extend through an opening 30 provided at the proximal end 22 of the handle housing 20. In other words, the connector 16 may be partially accommodated within the inner cavity 18 at the proximal end 22 of the handle housing 20.

The connector 16 comprises a recess 17. Recess 17 may be provided at the opposite side 11 of the connector 16 to which the head 14 is attachable. In the connector recess 17, a motor 34 along with an eccentric weight 35 for operating the personal care implement 10 is accommodated/mounted by means of press-fitting. In other words, the motor 34 and the eccentric weight 35 is mounted within the recess 17 of the connector 16. The part of the connector 16 comprising the recess 17 housing the motor 34 and eccentric weight 35 may be mounted within the inner cavity 18 of the handle housing 20.

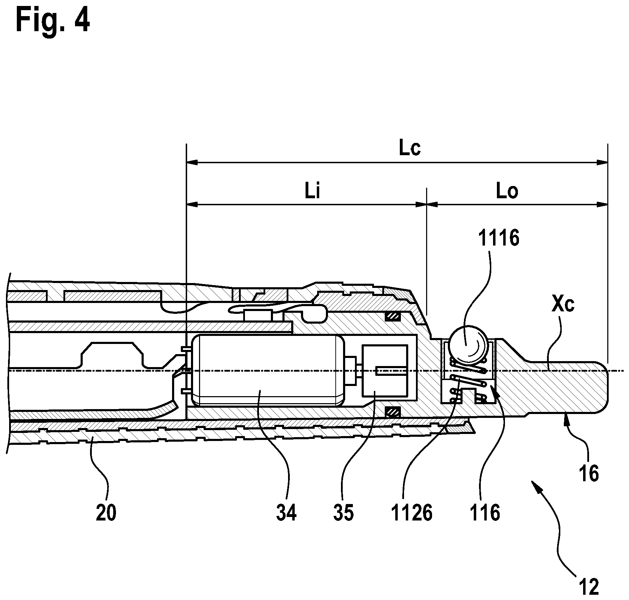

As derivable from Fig. 4, the connector 16 has an overall length extension Lc extending along a longitudinal connector axis Xc, the overall length extension Lc being composed of a sub-length Li extending and being located within the inner cavity 18 of the handle housing 20, and a sub-length Lo extending outside of the handle housing 20. A ratio Rc between the length Li extending within the inner cavity 18 and the length Lo extending outside of the housing 20 may be from about 1 to about 1.7, or from about 1 to about 1.5. The overall length extension Lc of the connector 16 may be from about 35 mm to about 45 mm, or from about 39 mm to about 43 mm. The sub-length Li of the connector 16 extending within the inner cavity 18 of the handle housing 20 may be from about 20 mm to about 25 mm, or from about 22 mm to about 24 mm, while the sub-length Lo of the connector 16 extending outside of the handle housing 20 may be from about 15 mm to about 20 mm, or from about 17 mm to about 19 mm.

A ratio Rhc between an overall length extension Lh of the handle housing 20 extending along a longitudinal housing axis Xh and the overall length extension Lc of the connector 16 extending along a longitudinal connector axis Xc may be from about 2.5 to about 4.5, or from about 3.0 to about 3.5. The overall length extension of the handle housing 20 and the overall length extension of the connector 16 is measured at the maximum extension of the housing 20 and connector 16, respectively. The overall length extension Lh of the housing 20 extending along the longitudinal housing axis may be from about 120 mm to about 150 mm, or from about 125 mm to about 145 mm, or from about 130 mm to about 140 mm, or from about 130 mm to about 135 mm.

The connector 16 is at least partially made from a material having an e-modulus being higher than the e-modulus of the material from which the handle housing 20 is made. For example, the material from which the connector is at least partially made may have an e-modulus of at least 4000 MPa, for example from about 4000 MPa to about 20000 MPa, or form about 10000 MPa to about 11000 MPa, or about 10400 MPa. A connector having such modulus of elasticity can be provided if the connector is at least partially molded from a hard plastic material, e.g. from a fiber reinforced material, in particular a glass-fiber reinforced material. Due to its high stiffness, glass fiber reinforced material is suitable for mounting the motor 34 with the eccentric weight 35 within the recess 17 of the connector 16 by means of press-fitting. Glass fiber reinforced material shows no to very limited relaxation over time, resulting in effective vibration transmissions over the full usual life-time of the handle/implement. The glass-fiber reinforced material may comprise a polymer base material in which about 10wt% to about 50wt%, or from about 25wt% to about 35wt%, or about 30wt% glass-fibers are embedded. The polymer base material may be a polyamide or polybutylene terephthalate, polyethylene terephthalate, or a combination of polybutylene terephthalate and polyethylene terephthalate.

A fiber reinforced material comprising from about 25wt% to about 35wt% glass fiber, wherein the glass fibers are embedded in either polyamide as a base material, or, alternatively in a base material comprising a mixture of polybutylene terephthalate and polyethylene terephthalate may have an e-modulus of about 10400 MPa. Such glass-fiber reinforced material shows superior molding properties while providing sufficient stiffness to the connector 16, as well as resistance against abrasion and wear out.

While the connector 16 may be made from a fiber reinforced material, e.g. glass-fiber reinforced material, the handle can be made from a standard hard plastic material, e.g. acrylonitrile styrene acrylate (ASA). If ASA is used as a material/base material for the handle housing 20, a material with an e-modulus of about 2500 MPa may be provided. The hard plastic material (e.g. ASA) may be at least partially over-molded by a thermoplastic elastomer (TPE) providing the handle 12 with improved aesthetic and/or gripping properties.

Also, the handle housing 20 may be made from at least two separate handle parts 52, 54, the separate parts 52, 54 being connected via a screw thread, for example. While the first part 52 of the housing 20 may be molded from a hard plastic material, the second part 54 may be made from the same or another material to provide the handle/housing with superior aesthetic and/or gripping effects. For example, the second part 54 may be also made from a hard plastic material, but over-molded with TPE to provide superior gripping properties during use of the personal care implement 10.

Between the first part 52 of the handle housing 20 and the second part 54 of the handle housing 20, a first O-ring 56 may be inserted to provide the handle of the personal care implement with additional aesthetic features and/or an indication element. Also, the first O-ring 56 may act as a sealing element to prevent any liquids, e.g. water or saliva, from entering the inner cavity 18 of the housing 20.

Further, on the connector 16, a second O-ring 58 may be provided at the proximal end 22 of the handle housing 20. The second O-ring 58 may serve as an aesthetic feature, an indication element and/or as a sealing element to prevent any liquids, like water and slurry, entering the inner cavity 18 of the handle housing 20. The first and/or the second O-ring 56, 58 may be made from an elastomeric material, for example.

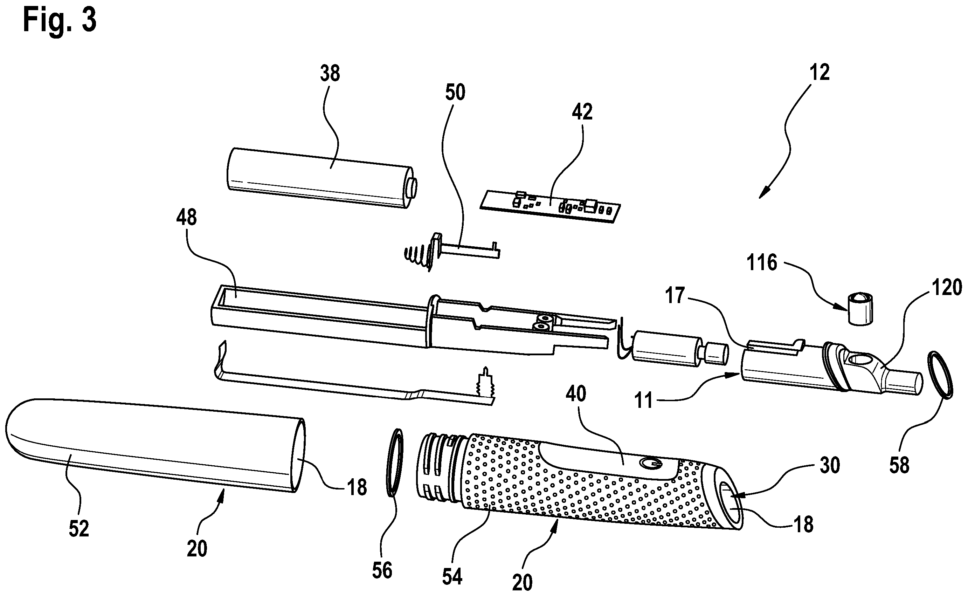

An energy source 38, e.g. a battery 38, for operating the personal care implement 10 may be accommodated within the inner cavity 18 of the handle housing 20. As derivable from Figs. 2 and 3, a switch assembly 40 connected to a Printed Circuit Board Assembly (PCBA) 42 provided within the inner cavity of the handle housing 20 can activate the energy source 38 and may switch the electrically operated personal care implement 10 to an ON/OFF status. Via the PCBA 42 electrical communication between the battery 38, as an example for an energy source, and the motor 34 can be provided.

As shown in Figs. 2 and 3, a chassis 48 may be inserted into the handle housing 20, the chassis 48 fixing and holding the energy source 38 via spring 50, the PCBA 42 and the connector 16 accommodating the motor 34 with the eccentric weight 35 in place.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An electrically operated assembly (12) for a personal care implement (10), the assembly (12) comprising a handle housing (20) defining an inner cavity (18), a connector (16) for repeatably attaching and detaching a head (14) to and from the assembly, and a motor (34) for operating the assembly, wherein
the connector (16) comprises a recess (17) in which the motor (34) is accommodated, **characterized in that** the connector (16) is at least partially made from a material having an e-modulus being higher than the e-modulus of the material from which the handle housing (20) is made, the material from which the connector (16) is at least partially made has an e-modulus of at least 4000 MPa, preferably from 4000 MPa to 20000 MPa, further preferably from 10000 MPa to 11000 MPa, even further preferably 10400 MPa, and the material from which the handle housing (20) is made is polypropylene, acrylic styrene acrylonitrile, or copolyester.

2. An electrically operated assembly (12) according to claim 1, wherein the connector (16) is at least partially molded from a hard plastic material, the hard plastic material being a fiber reinforced material, further preferably from a glass-fiber reinforced material.

3. An electrically operated assembly (12) according to any of the preceding claims, wherein the motor (34) comprises an eccentric weight (35), and the motor (34) comprising the eccentric weight (35) is mounted within the connector (16) by means of press-fitting.

4. An electrically operated assembly (12) according to any of the preceding claims, wherein an overall length extension (Lc) of the connector (16) has a sub-length (Li) extending within the inner cavity (18) defined by the handle housing (20), and a sub-length (Lo) extending outside of the handle housing (20), and the ratio (Rc) between the length (Li) extending within the inner cavity (18) and the length (Lo) extending outside of the handle housing (20) is from 1 to 1.7, preferably from 1 to 1.5.

5. An electrically operated assembly (12) according to any of the preceding claims, wherein an overall length extension (Lc) of the connector (16) extending along a longitudinal connector axis (Xc) is from 35 mm to 45 mm, preferably from 39 mm to 43 mm.

6. An electrically operated assembly (12) according to claim 4 or 5, wherein the sub-length (Li) of the connector (16) extending within the inner cavity (18) of the handle housing (20) is from 20 mm to abot 25 mm, preferably from 22 mm to 24 mm and/or wherein the sub-length (Lo) of the connector (16) extending outside of the housing (20) is from abut 15 mm to 20 mm, preferably from 17 mm to 19 mm.

7. An electrically operated assembly (12) according to any of the preceding claims, wherein a ratio (Rhc) between an overall length extension (Lh) of the handle housing (20) extending along a longitudinal housing axis (Xh) and an overall length extension (Lc) of the connector (16) extending along a longitudinal connector axis (Xc) is from 2.5 to 4.5, preferably from 3.0 to 3.5.

8. An electrically operated assembly (12) according to any of the preceding claims, wherein an overall length extension (Lh) of the handle housing (20) extending along a longitudinal housing axis (Xh) is from 120 mm to 150 mm, preferably from 125 mm to 145 mm, further preferably from 130 mm to 140 mm, even further preferably from 130 mm to 135 mm.

9. An electrically operated assembly (12) according to any of the preceding claims, wherein the recess (17) of the connector (16) accommodating the motor (34) is located in a sub-length (Li) of the connector (16) extending within the inner cavity (18) defined by the handle housing (20).

10. An electrically operated assembly (12) according to any of the preceding claims, wherein the inner cavity (18) of the housing (20) comprises an energy source (38), preferably a battery (38), for operating the personal care implement (10).

11. An electrically operated assembly (12) according to any of the preceding claims, wherein the connector (16) comprises a spring-loaded snap element (116) for repeatably attaching and detaching the head (14) to and from the assembly (12).

12. An electrically operated personal care implement (10) comprising an electrically operated assembly (12) according to any of the preceding claims and a head (14).

13. An electrically operated personal care implement (10) according to claim 12, wherein the implement (10) is an electrically operated oral care implement, preferably a toothbrush (10).

14. An electrically operated personal care implement (10) according to claim 12 or 14, wherein the head is repeatedly attachable to and detachable from the electrically operated assembly (12).

## Patentansprüche

1. Elektrisch betriebene Baugruppe (12) für ein Körperpflegehilfsmittel (10), die Baugruppe (12) umfassend ein Griffgehäuse (20), das einen Innenhohlraum (18) bestimmt, einen Verbinder (16) zum wiederholten Anbringen und Abnehmen eines Kopfstücks (14) an und von der Baugruppe und einen Motor (34) zum Betreiben der Baugruppe, wobei
der Verbinder (16) eine Aussparung (17) umfasst, in der der Motor (34) untergebracht ist, **dadurch gekennzeichnet, dass** der Verbinder (16) wenigstens teilweise aus einem Material hergestellt ist, das einen E-Modul aufweist, der höher als der E-Modul des Materials ist, aus dem das Griffgehäuse (20) hergestellt ist, das Material, aus dem der Verbinder (16) wenigstens teilweise hergestellt ist, einen E-Modul von wenigstens 4000 MPa, vorzugsweise von 4000 MPa bis 20000 MPa, weiter bevorzugt von 10000 MPa bis 11000 MPa, noch weiter bevorzugt von 10400 MPa, aufweist und das Material, aus dem das Griffgehäuse (20) hergestellt ist, Polypropylen, Acrylstyrol-Acrylnitril oder Copolyester ist.

2. Elektrisch betriebene Baugruppe (12) nach Anspruch 1, wobei der Verbinder (16) wenigstens teilweise aus einem harten Kunststoffmaterial, wobei das harte Kunststoffmaterial ein faserverstärktes Material ist, weiter bevorzugt aus einem glasfaserverstärkten Material, gegossen ist.

3. Elektrisch betriebene Baugruppe (12) nach einem der vorstehenden Ansprüche, wobei der Motor (34) ein Exzentergewicht (35) umfasst und der Motor (34) umfasst, dass das Exzentergewicht (35) mittels Presspassung innerhalb des Verbinders (16) montiert ist.

4. Elektrisch betriebene Baugruppe (12) nach einem der vorstehenden Ansprüche, wobei eine Gesamtlängenverlängerung (Lc) des Verbinders (16) eine Teillänge (Li), die sich innerhalb des Innenhohlraums (18), der durch das Griffgehäuse (20) bestimmt wird, erstreckt, und eine Teillänge (Lo), die sich außerhalb des Griffgehäuses (20) erstreckt, aufweist und das Verhältnis (Rc) zwischen der Länge (Li), die sich innerhalb des Innenhohlraums (18) erstreckt, und der Länge (Lo), die sich außerhalb des Griffgehäuses (20) erstreckt, von 1 bis 1,7, vorzugsweise von 1 bis 1,5, beträgt.

5. Elektrisch betriebene Baugruppe (12) nach einem der vorstehenden Ansprüche, wobei eine Gesamtlängenverlängerung (Lc) des Verbinders (16), die sich entlang einer Längsverbinderachse (Xc) erstreckt, von 35 mm bis 45 mm, vorzugsweise von 39 mm bis 43 mm, beträgt.

6. Elektrisch betriebene Baugruppe (12) nach Anspruch 4 oder 5, wobei die Teillänge (Li) des Verbinders (16), die sich innerhalb des inneren Hohlraums (18) des Griffgehäuses (20) erstreckt, von 20 mm bis etwa 25 mm, vorzugsweise von 22 mm bis 24 mm, beträgt und/oder wobei die Teillänge (Lo) des Verbinders (16), die sich außerhalb des Gehäuses (20) erstreckt, von etwa 15 mm bis 20 mm, vorzugsweise von 17 mm bis 19 mm, beträgt.

7. Elektrisch betriebene Baugruppe (12) nach einem der vorstehenden Ansprüche, wobei ein Verhältnis (Rhc) zwischen einer Gesamtlängenverlängerung (Lh) des Griffgehäuses (20), die sich entlang einer Längsgehäuseachse (Xh) erstreckt, und einer Gesamtlängenverlängerung (Lc) des Verbinders (16), die sich entlang einer Längsverbinderachse (Xc) erstreckt, von 2,5 bis 4,5, vorzugsweise von 3,0 bis 3,5, beträgt.

8. Elektrisch betriebene Baugruppe (12) nach einem der vorstehenden Ansprüche, wobei eine Gesamtlängenverlängerung (Lh) des Griffgehäuses (20), die sich entlang einer Längsgehäuseachse (Xh) erstreckt, von 120 mm bis 150 mm, vorzugsweise von 125 mm bis 145 mm, weiter bevorzugt von 130 mm bis 140 mm, noch weiter bevorzugt von 130 mm bis 135 mm, beträgt.

9. Elektrisch betriebene Baugruppe (12) nach einem der vorstehenden Ansprüche, wobei die Aussparung (17) des Verbinders (16), die den Motor (34) unterbringt, in einer Teillänge (Li) des Verbinders (16) angeordnet ist, die sich innerhalb des Innenhohlraums (18), der durch das Griffgehäuse (20) bestimmt wird, erstreckt.

10. Elektrisch betriebene Baugruppe (12) nach einem der vorstehenden Ansprüche, wobei der Innenhohlraum (18) des Gehäuses (20) eine Energiequelle (38), vorzugsweise eine Batterie (38), zum Betreiben des Körperpflegehilfsmittels (10) umfasst.

11. Elektrisch betriebene Baugruppe (12) nach einem der vorstehenden Ansprüche, wobei der Verbinder (16) ein federbelastetes Schnappelement (116) zum wiederholten Anbringen und Abnehmen des Kopfstücks (14) an und von der Baugruppe (12) umfasst.

12. Elektrisch betriebenes Körperpflegehilfsmittel (10), umfassend eine elektrisch betriebene Baugruppe (12) nach einem der vorstehenden Ansprüche und ein Kopfstück (14).

13. Elektrisch betriebenes Körperpflegehilfsmittel (10) nach Anspruch 12, wobei das Hilfsmittel (10) ein elektrisch betriebenes Zahnpflegehilfsmittel, vorzugsweise eine Zahnbürste (10), ist.

14. Elektrisch betriebenes Körperpflegehilfsmittel (10) nach Anspruch 12 oder 14, wobei das Kopfstück an der elektrisch betriebenen Baugruppe (12) wiederholt anbringbar und von dieser abnehmbar ist.

## Revendications

1. Ensemble (12) à commande électrique destiné à un instrument de soins personnels (10), l'ensemble (12) comprenant un logement (20) de poignée définissant une cavité interne (18), une liaison (16) permettant d'attacher et de détacher de manière répétée une tête (14) par rapport à l'ensemble, et un moteur (34) permettant de commander l'ensemble, dans lequel
la liaison (16) comprend un évidement (17) dans lequel le moteur (34) est reçu, **caractérisé en ce que** la liaison (16) est au moins partiellement fabriquée à partir d'un matériau ayant un module e qui est supérieur au module e du matériau à partir duquel le logement (20) de poignée est fabriqué, le matériau à partir duquel la liaison (16) est au moins partiellement fabriquée a un module e d'au moins 4000 MPa, de préférence de 4000 MPa à 20 000 MPa, de préférence en outre de 10 000 MPa à 11 000 MPa, même de préférence en outre de 10 400 MPa, et le matériau à partir duquel le logement (20) de poignée est fabriqué est du polypropylène, de l'acrylique-styrène-acrylonitrile ou du copolyester.

2. Ensemble (12) à commande électrique selon la revendication 1, dans lequel la liaison (16) est au moins partiellement moulée à partir d'un matériau plastique dur, le matériau plastique dur étant un matériau renforcé par des fibres, de préférence en outre à partir d'un matériau renforcé par des fibres de verre.

3. Ensemble (12) à commande électrique selon l'une quelconque des revendications précédentes, dans lequel le moteur (34) comprend un poids excentrique (35), et le moteur (34) comprenant le poids excentrique (35) est monté au sein de la liaison (16) au moyen d'un ajustement par pression.

4. Ensemble (12) à commande électrique selon l'une quelconque des revendications précédentes, dans lequel une extension en longueur globale (Lc) de la liaison (16) a une sous-longueur (Li) s'étendant au sein de la cavité interne (18) définie par le logement (20) de poignée, et une sous-longueur (Lo) s'étendant à l'extérieur du logement (20) de poignée, et le rapport (Rc) entre la longueur (Li) s'étendant au sein de la cavité interne (18) et la longueur (Lo) s'étendant à l'extérieur du logement (20) de poignée va de 1 à 1,7, de préférence de 1 à 1,5.

5. Ensemble (12) à commande électrique selon l'une quelconque des revendications précédentes, dans lequel une extension en longueur globale (Lc) de la liaison (16) s'étendant le long d'un axe longitudinal de liaison (Xc) va de 35 mm à 45 mm, de préférence de 39 mm à 43 mm.

6. Ensemble (12) à commande électrique selon la revendication 4 ou 5, dans lequel la sous-longueur (Li) de la liaison (16) s'étendant au sein de la cavité interne (18) du logement (20) de poignée va de 20 mm à environ 25 mm, de préférence de 22 mm à 24 mm et/ou dans lequel la sous-longueur (Lo) de la liaison (16) s'étendant à l'extérieur du logement (20) va d'environ 15 mm à 20 mm, de préférence de 17 mm à 19 mm.

7. Ensemble (12) à commande électrique selon l'une quelconque des revendications précédentes, dans lequel un rapport (Rhc) entre une extension en longueur globale (Lh) du logement (20) de poignée s'étendant le long d'un axe longitudinal de logement (Xh) et une extension en longueur globale (Lc) de la liaison (16) s'étendant le long d'un axe longitudinal de liaison (Xc) va de 2,5 à 4,5, de préférence de 3,0 à 3,5.

8. Ensemble (12) à commande électrique selon l'une quelconque des revendications précédentes, dans lequel une extension en longueur globale (Lh) du logement (20) de poignée s'étendant le long d'un axe longitudinal de logement (Xh) va de 120 mm à 150 mm, de préférence de 125 mm à 145 mm, de préférence en outre de 130 mm à 140 mm, même de préférence en outre de 130 mm à 135 mm.

9. Ensemble (12) à commande électrique selon l'une quelconque des revendications précédentes, dans lequel l'évidement (17) de la liaison (16) recevant le moteur (34) est localisé dans une sous-longueur (Li) de la liaison (16) s'étendant au sein de la cavité interne (18) définie par le logement (20) de poignée.

10. Ensemble (12) à commande électrique selon l'une quelconque des revendications précédentes, dans lequel la cavité interne (18) du logement (20) comprend une source d'énergie (38), de préférence une batterie (38), permettant de commander l'instrument de soins personnels (10).

11. Ensemble (12) à commande électrique selon l'une quelconque des revendications précédentes, dans lequel la liaison (16) comprend un élément encliquetable monté sur ressort (116) permettant d'attacher et de détacher de manière répétée la tête (14) par rapport à l'ensemble (12).

12. Instrument de soins personnels (10) à commande électrique comprenant un ensemble (12) à commande électrique selon l'une quelconque des revendications précédentes et une tête (14).

13. Instrument de soins personnels (10) à commande électrique selon la revendication 12, dans lequel l'instrument (10) est un instrument de soins personnels à commande électrique, de préférence une brosse à dents (10).

14. Instrument de soins personnels (10) à commande électrique selon la revendication 12 ou 14, dans lequel la tête peut être attachée et détachée de manière répétée par rapport à l'ensemble (12) à commande électrique.
